# EUROPÄISCHE PATENTSCHRIFT

(11) **EP 0 835 172 B1**
(45) Veröffentlichungstag und Bekanntmachung des Hinweises auf die Patenterteilung: **07.08.2002**
(21) Anmeldenummer: 96922812.1
(22) Anmeldetag: 15.06.1996
(51) Int. Cl.: B23K 35/10, B23K 35/40

(54) **VERFAHREN ZUM HERSTELLEN EINES KERNDRAHTES FÜR SCHWEISSELEKTRODEN SOWIE ELEKTRODEN-KERNDRAHT**
PROCESS FOR PRODUCING A CORE WIRE FOR WELDING ELECTRODES; ELECTRODE CORE WIRE
PROCEDE DE FABRICATION D'UN FIL D'AME POUR ELECTRODES DE SOUDAGE ET FIL D'AME AINSI OBTENU

(30) Priorität: 28.06.1995 DE 19523400
(43) Veröffentlichungstag der Anmeldung: 15.04.1998
(73) Patentinhaber: CASTOLIN S.A., 1001 Lausanne - St. Sulpice (CH)
(72) Erfinder: FLUCKIGER, Jean-Louis, 05642-020-Sao Paulo, SP (BR); WABNEGGER, Johann, CH-1025 St. Sulpice (CH)
(74) Vertreter: Schön, Theodor, Patent- und Zivilingenieur
(86) Internationale Anmeldenummer: EP9602589
(87) Internationale Veröffentlichungsnummer: WO9701413

(56) Entgegenhaltungen:
- EP-A- 0 015 746
- WO-A-86/03716
- BE-A- 777 588
- DE-A- 2 244 304
- FR-A- 2 158 621
- GB-A- 246 140

## Beschreibung

Die Erfindung betrifft ein Verfahren zum Herstellen eines Kerndrahtes für Schweißelektroden auf Eisen-, Nickel-, Kobalt-, Kupfer- und/oder Aluminiumbasis. Zudem erfaßt die Erfindung einen solchen Elektroden-Kerndraht.

Bei der Verwendung von auf dem Markt befindlichen Massiv- und Fülldrähten als Kerndrähte für die Herstellung von Schweißelektroden entstehen Probleme in Hinsicht auf die Erwärmung der Elektrode beim Schweißen, die in manchen Fällen rotglühend wird. Bei Elektroden die aus Fülldrähten hergestellt werden, entstehen Mängel durch den dünnen Mantel, zudem ist auch hier eine starke Erwärmung und eine Destabilisierung des Lichtbogens beim Schweißen festzustellen.

Sollten Elektroden mit komplexer Legierungszusammensetzung hergestellt werden, so sind nicht genormte Kerndrähte sehr selten auf dem Markt zu finden mit der Folge, daß man sie kaum erhalten kann, insbesondere dann, wenn es sich um kleinere Liefermengen handeln soll.

Beispielhaft offenbart die DE-A-22 44 304 ein nahtloses, mit Pulver gefülltes Rohr, zwei nahtlose und ineinandergeschobene, mit Pulver gefüllte Rohre sowie ein nahtloses, mit Pulver gefülltes Rohr, das einen Kern enthält. Diese Konstruktionen werden durch Ziehen -- ausschließlich in vertikaler Position -- mit gleichzeitigem Vibrieren zu einem Durchmesser von zumindest 3,0 mm geformt - dies unter gleichzeitigem Verpressen des Pulvers. Ein solches Verfahren kann nur zu begrenzten Längen führen. Mit der WO 86/03716 wird vorgeschlagen, den Durchmesser eines einen -- aus wenigstens einem Draht bestehenden -- Kern umfangenden Mantels um etwa 20 % bis 40 % zu reduzieren.

Da also das Senken der Herstellungskosten für Kerndrähte mit einer speziellen Legierung zu einem großen Marktvorteil für solche Produkte führt, hat sich der Erfinder das Ziel gesetzt, Verfahren und Kerndraht der eingangs erwähnten Art zu verbessern.

Bei Versuchen, eine Methode zu finden, relativ leicht und ohne Schwierigkeiten die chemische Analyse eines Kerndrahtes auch für kleine Produktionsmengen abzustimmen, wurde die Lösung des Problems nach der Lehre der unabhängigen Patentansprüche gefunden.

Bei dem erfindungsgemäßen Verfahren zum Herstellen eines Kerndrahtes für Schweißelektroden auf Eisen-, Nickel-, Kobalt-, Kupfer- und/oder Aluminiumbasis wird ein Füll- oder Massivdraht bezüglich des Kerndrahtes gleicher oder unterschiedlicher chemischer Zusammensetzung zumindest einfach ummantelt, wobei zwei oder mehr Metallbänder aufeinanderliegend zu einem rinnenartigen Rohling etwa teilkreisartigen Querschnitts verformt, mit einem Pulver gefüllt und querschnittlich geschlossen werden. Auch liegt es im Rahmen der Erfindung, zumindest ein Metallband zu einem rinnenartigen Rohling etwa teilkreisförmigen Querschnitts zu verformen und in diesen einen Fülldraht oder einen Metalldraht einzulegen, wonach der Rohling querschnittlich geschlossen wird.

Die Oberflächen der den Kerndraht bildenden Bänder und/oder Drähte sollen erfindungsgemäß zudem thermisch oder chemisch nachbehandelt werden.

Nach einem Merkmal der Erfindung weist der Kerndraht einen mehrfach ummantelten Kern auf. Dieser Kerndraht kann ein zumindest einfach ummantelter Fülldraht sein, ein ummantelter Kern aus einem Pulver oder ein wenigstens einfach ummantelter Massivdraht.

Bezüglich der Auswahl der Legierungen für die Ummantelung und den Mantel des Fülldrahtes wird auf die Patentansprüche 7 bis 22 Bezug genommen.

Es kann vorteilhaft sein, sowohl die Ummantelung als auch den eingelegten Massivdraht aus einer Eisen-Legierung, einer Nickel-Legierung oder einer Kupfer-Legierung herzustellen. Weitere Ausgestaltungen sind in den Patentansprüchen 24,26,28 zu finden.

Zu Verbesserungen führt auch die Maßgabe, den Außendurchmesser des nach dem Verfahren hergestellten Kerndrahtes zwischen 1,6 bis 6,0 mm zu wählen. Ein Band für den Außenmantel des Kerndrahtes soll eine Banddicke von 0,1 bis 0,8 mm, vorzugsweise 0,2 bis 0,5 mm, aufweisen und/oder ein Band zum Herstellen des eingelegten Fülldrahtes eine Banddicke von 0,2 bis 0,5 mm. Das Verhältnis zwischen der Wanddicke des Außenmantels und der Dicke des Innenmantels wird bevorzugt zwischen 1 : 1 und 1 : 2 gewählt.

Erfindungsgemäß soll die Füllung des Fülldrahtes Hartstoffe - wie Boride, Karbide, Nitride und Silizide enthalten und/oder als Doxidatoren Elemente wie Silizium, Mangan od. dgl. Als Lichtbogenstabilisatoren können Oxide, Silikate, Karbonate od. dgl. Aufnahme in die Füllung des Fülldrahtes finden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: den Querschnitt durch einen Doppelmantel-Elektrodenkerndraht;
- Fig. 2,4:: Fließschemata zu Herstellungsverfahren;
- Fig. 3:: eine Skizze mit fünf Stufen zur Entstehung des Doppelmantel-Elektrodenkerndrahtes nach Fig. 1 in einem Arbeitsgang;
- Fig. 5:: eine Skizze mit fünf Stufen zur Entstehung eines anderen Elektrodenkerndrahtes.

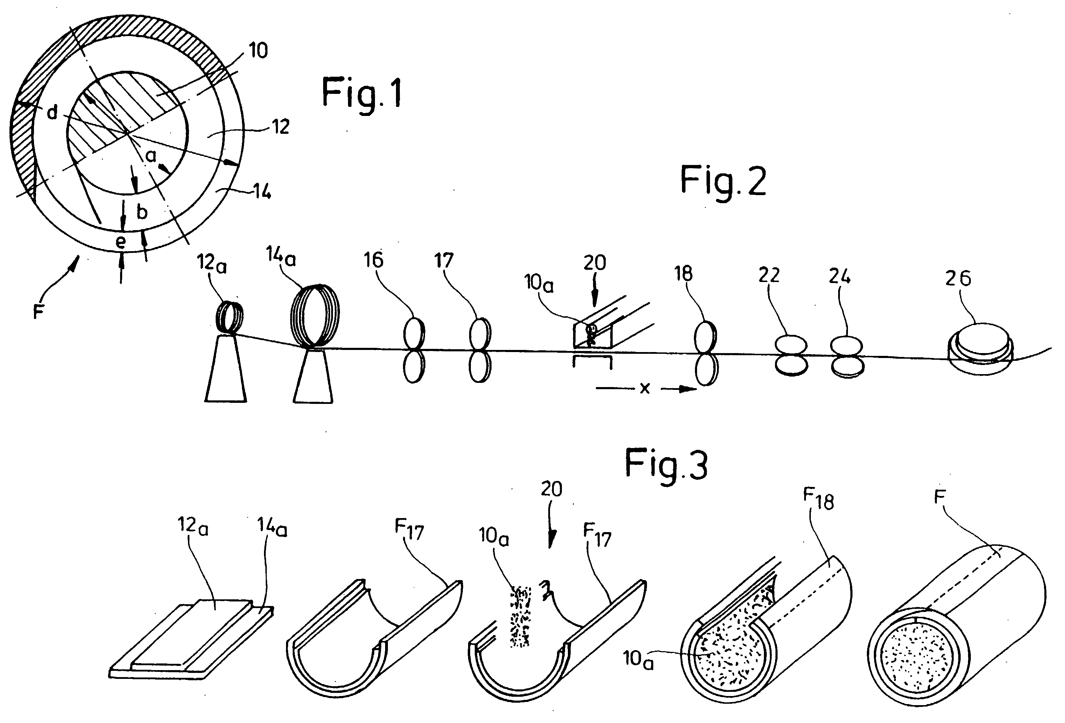

Ein Doppelmantel-Fülldraht F des überhöht dargestellten Durchmessers d besteht gemäß Fig. 1 aus einem eingelegten Füllungskern 10 des Durchmessers a, einem diesen umschließenden Innenmantel 12 der Dicke b und einem um letzteren gelegten Außenmantel 14 der dazu geringeren Dicke e.

Bei dem in Fig. 2 angedeuteten Herstellungsverfahren werden zwei Metallbänder 12ₐ und 14ₐ zum Erzeugen des Innenmantels 12 bzw. des Außenmantels 14 einem ersten Paar von Biegerollen 16 zugeführt und nach einem weiteren Paar von Biegerollen 17 durch eine Füllstation 20 geleitet, in welcher Pulver 10ₐ für den Füllungskern 10 eingebracht wird.

In Fig. 3 ist neben einer links zu erkennenden Skizze der beiden flach aufeinanderliegenden Metallbänder 12ₐ,14ₐ eine Rinne F₁₇ als Formrohling nach dem zweiten Paar von Biegerollen 17 zu erkennen, rechts davon das Einschütten des Pulvers 10ₐ in jene Rinne F₁₇.

Der Füllstation 20 folgt in Förderrichtung x ein weiteres Paar von Biegerollen 18; die entsprechende Rohlingsform mit Pulvereinlage 10ₐ ist in Fig. 3 mit F₁₈ bezeichnet. Zwei Paare von Schließrollen 22,24 schließen den Doppelmantel-Fülldraht F und übergeben ihn einem Aufrollhaspel 26.

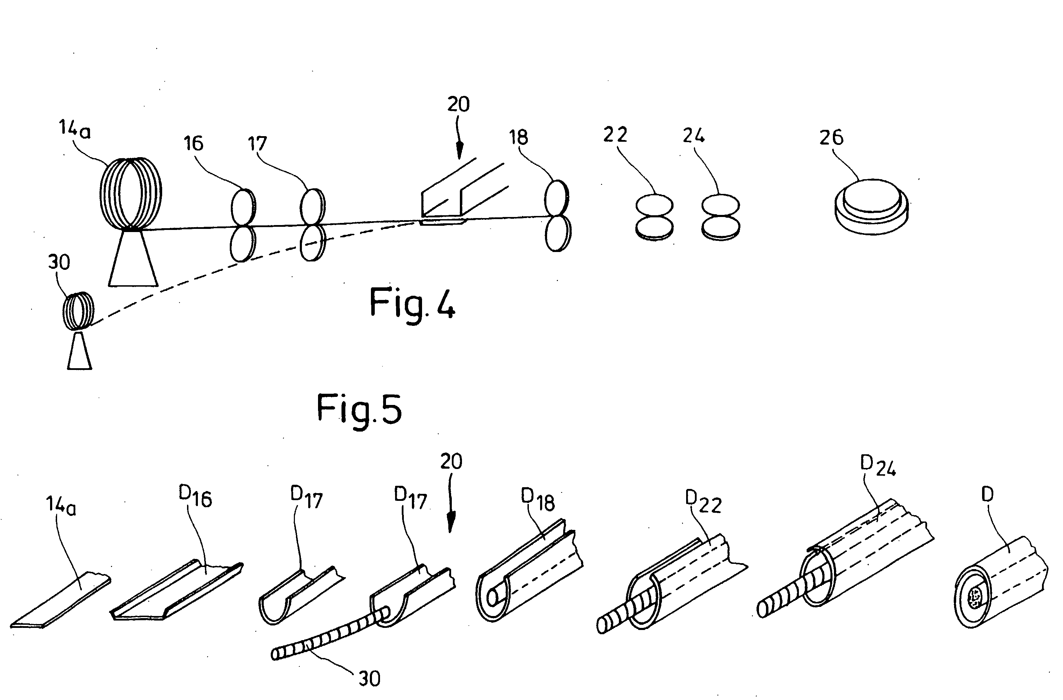

Das Entstehen eines anderen Mantel-Fülldrahtes D ist den Fig. 4 und 5 zu entnehmen; dort gelangt ein äußeres Metallband 14ₐ allein durch die beiden Biegerollenpaare 16,17; in Fig. 5 ist die Verformung des Metallbandes 14ₐ zur Flachrinne D₁₆ und dann zur Rundrinne D₁₇ verdeutlicht. An der Füllstation 20 schiebt sich in Förderrichtung x ein seitlich zugebrachter Fülldraht 30 in die Rundrinne D₁₇, die zwischen den Biegerollen 18, dann in den Paaren der Schließrollen 22,24 zunehmend geschlossen wird (Rohlinge D₂₂,D₂₄). Zum Aufrollhaspel 26 gelangt dann der fertige Mantellfülldraht D.

Hier wird also der nach üblichen Verfahren in der chemischen Zusammensetzung abgestimmte Fülldraht 30 mit dem zusätzlichen Metallband 14ₐ ummantelt.

Die Zusammensetzung des Metallbandes 14ₐ kann dem Mantel des eingelegten Fülldrahtes 30 entsprechen oder eine andere Zusammensetzung zum Herstellen einer Schweißbadanalyse aufweisen.

Als weitere Möglichkeit, Pseudo-Legierungen herzustellen, ist anzusehen, nach dem oben beschriebenen Verfahren einen Massivdraht -- statt des Fülldrahtes 30 -- mit einer oder mehreren Hüllen zu versehen und so Zusammensetzungen zu fertigen, die nach den normalen Verfahrenstechniken wie Schmelzen und Verformen nicht herstellbar sind.

Mit den so entstehenden Kerndrähten können anschließend nach konventioneller Art umhüllte Stabelektroden mit Einfachumhüllung oder Doppelmantelektroden erzeugt werden.

## Patentansprüche

1. Verfahren zum Herstellen eines Kerndrahtes für Schweißelektroden auf Eisen-, Nickel-, Kobalt-, Kupfer- und/oder Aluminiumbasis, bei dem ein Füll- oder Massivdraht (30) bezüglich des Kerndrahtes (F) gleicher oder unterschiedlicher chemischer Zusammensetzung zumindest einfach ummantelt wird, wobei zwei oder mehr Metallbänder (12ₐ, 14ₐ) aufeinanderliegend zu einem rinnenartigen Rohling (F17) etwa teilkreisartigen Querschnitts verformt, mit einem Pulver (10ₐ) gefüllt und querschnittlich geschlossen werden.

2. Verfahren zum Herstellen eines Kerndrahtes für Schweißelektroden auf Eisen-, Nickel-, Kobalt-, Kupfer- und/oder Aluminiumbasis, bei dem ein Füll- oder Massivdraht (30) bezüglich des Kerndrahtes (D) gleicher oder unterschiedlicher chemischer Zusammensetzung zumindest einfach ummantelt wird, wobei zumindest ein Metallband (14ₐ) zu einem rinnenartigen Rohling (D17) etwa teilkreisartigen Querschnitts verformt und in diesen ein Fülldraht (30) oder ein Metalldraht eingelegt wird, wonach der Rohling D17) querschnittlich geschlossen wird.

3. Verfahren nach Anspruch 1 oder 2, **dadurch gekennzeichnet, daß** die Oberflächen der den Kerndraht (D, F) bildenden Bänder und/oder Drähte thermisch oder chemisch nachbehandelt werden.

4. Elektroden-Kerndraht, der nach dem Verfahren der Ansprüche 1 bis 3 hergestellt ist, **dadurch gekennzeichnet, daß** der Kerndraht (D,F) einen mehrfach ummantelten Kern aufweist.

5. Elektroden-Kerndraht nach Anspruch 4, **gekennzeichnet durch** einen zumindest einfach ummantelten Fülldraht (30) als Kern.

6. Elektroden-Kerndraht nach Anspruch 4, **dadurch gekennzeichnet, daß** der ummantelte Kern (10) aus einem Pulver gefertigt ist.

7. Elektroden-Kerndraht nach Anspruch 4 oder 5, **dadurch gekennzeichnet, daß** Ummantelung (12,14) und Mantel des Fülldrahtes (30) aus einer Eisen-Legierung bestehen.

8. Elektroden-Kerndraht nach Anspruch 4 oder 5, **dadurch gekennzeichnet, daß** Ummantelung (12,14) und Mantel des Fülldrahtes (30) aus einer Eisen-Chrom-Legierung bestehen.

9. Elektroden-Kerndraht nach Anspruch 4 oder 5, **dadurch gekennzeichnet, daß** die Ummantelung (12,14) aus einer Eisen-Legierung und der Mantel des Fülldrahtes (30) aus einer Eisen-Chrom-Legierung bestehen.

10. Elektroden-Kerndraht nach Anspruch 4 oder 5, **dadurch gekennzeichnet, daß** die Ummantelung (12,14) aus einer Eisen-Legierung und der Mantel des Fülldrahtes (30) aus einer Nickel-Legierung bestehen.

11. Elektroden-Kerndraht nach Anspruch 4 oder 5, **dadurch gekennzeichnet, daß** die Ummantelung (12,14) aus einer Eisen-Legierung und der Mantel des Fülldrahtes (30) aus einer Nickel-Chrom-Legierung bestehen.

12. Elektroden-Kerndraht nach Anspruch 4 oder 5, **dadurch gekennzeichnet, daß** die Ummantelung (12,14) aus einer Eisen-Chrom-Legierung und der Mantel des Fülldrahtes (30) aus einer Nickel-Legierung bestehen.

13. Elektroden-Kerndraht nach Anspruch 4 oder 5, **dadurch gekennzeichnet, daß** Ummantelung (12,14) und Mantel des Fülldrahtes (30) aus einer Nickel-Legierung bestehen.

14. Elektroden-Kerndraht nach Anspruch 4 oder 5, **dadurch gekennzeichnet, daß** Ummantelung (12,14) und Mantel des Fülldrahtes (30) aus einer Nickel-Chrom-Legierung bestehen.

15. Elektroden-Kerndraht nach Anspruch 4 oder 5, **dadurch gekennzeichnet, daß** die Ummantelung (12,14) aus einer Nickel-Legierung und der Mantel des Fülldrahtes (30) aus einer Nickel-Chrom-Legierung bestehen.

16. Elektroden-Kerndraht nach Anspruch 4 oder 5, **dadurch gekennzeichnet, daß** die Ummantelung (12,14) aus einer Nickel-Legierung und der Mantel des Fülldrahtes (30) aus einer Kupfer-Legierung bestehen.

17. Elektroden-Kerndraht nach Anspruch 4 oder 5, **dadurch gekennzeichnet, daß** Ummantelung (12,14) und Mantel des Fülldrahtes (30) aus einer Kupfer-Legierung bestehen.

18. Elektroden-Kerndraht nach Anspruch 4 oder 5, **dadurch gekennzeichnet, daß** die Ummantelung (12,14) aus einer Kupfer-Legierung und der Mantel des Fülldrahtes aus einer Nickel-Legierung bestehen.

19. Elektroden-Kerndraht nach Anspruch 4 oder 5, **dadurch gekennzeichnet, daß** Ummantelung (12,14) und Mantel des Fülldrahtes (30) aus einer Kobalt-Legierung bestehen.

20. Elektroden-Kerndraht nach Anspruch 4 oder 5, **dadurch gekennzeichnet, daß** die Ummantelung (12,14) aus einer Kobalt-Legierung und der Mantel des Fülldrahtes (30) aus einer Nickel-Legierung bestehen.

21. Elektroden-Kerndraht nach Anspruch 4 oder 5, **dadurch gekennzeichnet, daß** die Ummantelung (12,14) aus Aluminium oder einer Aluminium-Legierung und der Mantel des Fülldrahtes (30) aus einer Eisen- oder Nickel-Legierung bestehen.

22. Elektroden-Kerndraht nach Anspruch 4 oder 5, **dadurch gekennzeichnet, daß** die Ummantelung (12,14) aus Aluminium und der Mantel des Fülldrahtes (30) aus einer Aluminium-Legierung bestehen.

23. Elektroden-Kerndraht nach Anspruch 4, **dadurch gekennzeichnet, daß** er einen zumindest einfach ummantelten Massivdraht aufweist sowie Ummantelung (12,14) und eingelegter Massivdraht aus einer Eisen-Legierung bestehen.

24. Elektroden-Kerndraht nach Anspruch 4, **dadurch gekennzeichnet, daß** er einen zumindest einfach ummantelten Massivdraht aufweist sowie die Ummantelung (12,14) aus einer Eisen-Legierung und der eingelegte Massivdraht aus einer Nickel-Legierung bestehen.

25. Elektroden-Kerndraht nach Anspruch 4, **dadurch gekennzeichnet, daß** er einen zumindest einfach ummantelten Massivdraht aufweist sowie Ummantelung (12,14) und eingelegter Massivdraht aus einer Nickel-Legierung bestehen.

26. Elektroden-Kerndraht nach Anspruch 4, **dadurch gekennzeichnet, daß** er einen zumindest einfach ummantelten Massivdraht aufweist sowie die Ummantelung (12,14) aus einer Nickel-Legierung und der eingelegte Massivdraht aus einer Kupfer-Legierung bestehen.

27. Elektroden-Kerndraht nach Anspruch 4, **dadurch gekennzeichnet, daß** er einen zumindest einfach ummantelten Massivdraht aufweist sowie Ummantelung (12,14) und eingelegter Massivdraht aus einer Kupfer-Legierung bestehen.

28. Elektroden-Kerndraht nach Anspruch 4, **dadurch gekennzeichnet, daß** er einen zumindest einfach ummantelten Massivdraht aufweist sowie die Ummantelung (12,14) des eingelegten Massivdrahtes aus Aluminium oder einer Aluminium-Legierung bestehen.

29. Elektroden-Kerndraht nach einem der Ansprüche 4 bis 28, **gekennzeichnet durch** einen Außendurchmesser (d) des nach diesem Verfahren hergestellten Kerndrahtes (D,F) zwischen 1,6 bis 6,0 mm.

30. Elektroden-Kerndraht nach einem der Ansprüche 4 bis 28, **dadurch gekennzeichnet, daß** ein Band (14ₐ) für den Außenmantel (14) des Kerndrahtes (D,F) eine Banddicke (e) von 0,1 bis 0,8 mm, vorzugsweise 0,2 bis 0,5 mm, aufweist.

31. Elektroden-Kerndraht nach den'Ansprüchen 4, 5, 7 bis 22, **dadurch gekennzeichnet, daß** ein Band zum Herstellen des eingelegten Fülldrahtes (30) eine Banddicke von 0,2 bis 0,5 mm aufweist.

32. Elektroden-Kerndraht nach einem der Ansprüche 4 bis 31, **dadurch gekennzeichnet, daß** die Wanddicken (b,e) der Mäntel (12,14) unterschiedlich sind.

33. Elektroden-Kerndraht nach einem der Ansprüche 4 bis 32, **gekennzeichnet durch** ein Verhältnis zwischen der Wanddicke (e) des Außenmantels (14) und der Dicke (b) des Innenmantels (12) zwischen 1 : 1 und 1 : 2.

34. Elektroden-Kerndraht nach den Ansprüchen 4, 5, 7 bis 22, **dadurch gekennzeichnet, daß** die Füllung des Fülldrahtes (30) Hartstoffe wie Boride, Karbide, Nitride und Silizide enthält.

35. Elektroden-Kerndraht nach den Ansprüchen 4, 5, 7 bis 22, **dadurch gekennzeichnet, daß** die Füllung des Fülldrahtes (30) als Deoxidatoren Elemente wie Silizium, Mangan od. dgl. enthält.

36. Elektroden-Kerndraht nach den Ansprüchen 4, 5, 7 bis 22, **dadurch gekennzeichnet, daß** die Füllung des Fülldrahtes (30) Lichtbogenstabilisatoren wie Oxide, Silikate, Karbonate od. dgl. enthält.

37. Elektroden-Kerndraht nach einem der Ansprüche 4 bis 36, **dadurch gekennzeichnet, daß** die Oberflächen der Bänder (12ₐ,14ₐ) und der Drähte für den Kerndraht mit einer metallischen Schicht versehen, insbesondere verkupfert, sind.

## Claims

1. Process for producing a core wire for welding electrodes based on iron, nickel, cobalt, copper and/or aluminium, in which a filler or solid wire (30) of the same or different chemical composition with regard to the core wire (F) is sheathed at least once, wherein two or more metal bands (12ₐ, 14ₐ) lying one on another are deformed to form a channel-like blank (F17) of approximately pitch-circle cross-section, filled with a powder (10ₐ) and closed in cross-sectional manner.

2. Process for producing a core wire for welding electrodes based on iron, nickel, cobalt, copper and/or aluminium, in which a filler or solid wire (30) of the same or different chemical composition with regard to the core wire (D) is sheathed at least once, wherein at least one metal band (14ₐ) is deformed to form a channel-like blank (D17) of approximately pitch-circle cross-section, and a filler wire (30) or a metal wire is embedded in the latter, after which the blank D17) is closed in cross-sectional manner.

3. Process according to claim 1 or 2, **characterised in that** the surfaces of the bands and/or wires forming the core wire (D, F) are subsequently treated thermally or chemically.

4. Electrode core wire, which is produced by the process of claims 1 to 3, **characterised in that** the core wire (D, F) has a core sheathed several times.

5. Electrode core wire according to claim 4, **characterised by** a filler wire (30) sheathed at least once as the core.

6. Electrode core wire according to claim 4, **characterised in that** the sheathed core (10) is made from a powder.

7. Electrode core wire according to claim 4 or 5, **characterised in that** sheathing (12, 14) and jacket of the filler wire (30) consist of an iron alloy

8. Electrode core wire according to claim 4 or 5, **characterised in that** sheathing (12, 14) and jacket of the filler wire (30) consist of an iron-chromium alloy.

9. Electrode core wire according to claim 4 or 5, **characterised in that** the sheathing (12, 14) consists of an iron alloy and the jacket of the filler wire (30) consists of an iron-chromium alloy.

10. Electrode core wire according to claim 4 or 5, **characterised in that** the sheathing (12, 14) consists of an iron alloy and the jacket of the filler wire (30) consists of a nickel alloy.

11. Electrode core wire according to claim 4 or 5, **characterised in that** the sheathing (12, 14) consists of an iron alloy and the jacket of the filler wire (30) consists of a nickel-chromium alloy.

12. Electrode core wire according to claim 4 or 5, **characterised in that** the sheathing (12, 14) consists of an iron-chromium alloy and the jacket of the filler wire (30) consists of a nickel alloy.

13. Electrode core wire according to claim 4 or 5, **characterised in that** sheathing (12, 14) and jacket of the filler wire (30) consist of a nickel alloy.

14. Electrode core wire according to claim 4 or 5, **characterised in that** sheathing (12, 14) and jacket of the filler wire (30) consist of a nickel-chromium alloy.

15. Electrode core wire according to claim 4 or 5, **characterised in that** the sheathing (12, 14) consists of a nickel alloy and the jacket of the filler wire (30) consists of a nickel-chromium alloy.

16. Electrode core wire according to claim 4 or 5, **characterised in that** the sheathing (12, 14) consists of a nickel alloy and the jacket of the filler wire (30) consists of a copper alloy.

17. Electrode core wire according to claim 4 or 5, **characterised in that** sheathing (12, 14) and jacket of the filler wire (30) consist of a copper alloy.

18. Electrode core wire according to claim 4 or 5, **characterised in that** the sheathing (12, 14) consists of a copper alloy and the jacket of the filler wire consists of a nickel alloy.

19. Electrode core wire according to claim 4 or 5, **characterised in that** sheathing (12, 14) and jacket of the filler wire (30) consist of a cobalt alloy.

20. Electrode core wire according to claim 4 or 5, **characterised in that** the sheathing (12, 14) consists of a cobalt alloy and the jacket of the filler wire (30) consists of a nickel alloy.

21. Electrode core wire according to claim 4 or 5, **characterised in that** the sheathing (12, 14) consists of aluminium or an aluminium alloy and the jacket of the filler wire (30) consists of an iron or nickel alloy.

22. Electrode core wire according to claim 4 or 5, **characterised in that** the sheathing (12, 14) consists of aluminium and the jacket of the filler wire (30) consists of an aluminium alloy.

23. Electrode core wire according to claim 4, **characterised in that** it has a solid wire sheathed at least once and sheathing (12, 14) and embedded solid wire consist of an iron alloy

24. Electrode core wire according to claim 4, **characterised in that** it has a solid wire sheathed at least once and sheathing (12, 14) consists of an iron alloy and the embedded solid wire consists of a nickel alloy.

25. Electrode core wire according to claim 4, **characterised in that** it has a solid wire sheathed at least once and sheathing (12, 14) and embedded solid wire consist of a nickel alloy.

26. Electrode core wire according to claim 4, **characterised in that** it has a solid wire sheathed at least once and the sheathing (12, 14) consists of a nickel alloy and the embedded solid wire consists of a copper alloy.

27. Electrode core wire according to claim 4, **characterised in that** it has a solid wire sheathed at least once and sheathing (12, 14) and embedded solid wire consist of a copper alloy.

28. Electrode core wire according to claim 4, **characterised in that** it has a solid wire sheathed at least once and the sheathing (12, 14) of the embedded solid wire consist of aluminium or an aluminium alloy.

29. Electrode core wire according to one of claims 4 to 28, **characterised by** an external diameter (d) of the core wire (D, F) produced by this process between 1.6 to 6.0 mm.

30. Electrode core wire according to one of claims 4 to 28, **characterised in that** a band (14ₐ) for the outer jacket (14) of the core wire (D, F) has a band thickness (e) of 0.1 to 0.8 mm, preferably 0.2 to 0.5 mm.

31. Electrode core wire according to claims 4, 5, 7 to 22, **characterised in that** a band for producing the embedded filler wire (30) has a band thickness of 0.2 to 0.5 mm.

32. Electrode core wire according to one of claims 4 to 31, **characterised in that** the wall thicknesses (b, e) of the jackets (12, 14) are different.

33. Electrode core wire according to one of claims 4 to 32, **characterised by** a ratio between the wall thickness (e) of the outer jacket (14) and the thickness (b) of the inner jacket (12) between 1: 1 and 1:2.

34. Electrode core wire according to claims 4, 5, 7 to 22, **characterised in that** the filling of the filler wire (30) contains hard materials, such as borides, carbides, nitrides and silicides.

35. Electrode core wire according to claims 4, 5, 7 to 22, **characterised in that** the filling of the filler wire (30) contains elements, such as silicon, manganese or the like, as deoxidisers.

36. Electrode core wire according to claims 4, 5, 7 to 22, **characterised in that** the filling of the filler wire (30) contains arc stabilisers, such as oxides, silicates, carbonates or the like.

37. Electrode core wire according to one of claims 4 to 36, **characterised in that** the surfaces of the bands (12ₐ, 14ₐ) and the wires for the core wire are provided with a metallic layer, in particular treated with copper.

## Revendications

1. Procédé pour fabriquer un fil d'âme pour des électrodes de soudure à base de fer, de nickel, de cobalt, de cuivre et/ou d'aluminium, dans lequel un fil rempli ou fil massif (30) présentant la même composition chimique que le fil d'âme (F) ou une composition différente, est enveloppé au moins une fois, de telle façon qu'au moins deux bandes métalliques (12ₐ, 14ₐ) placées l'une au-dessus de l'autre sont formées en une ébauche (F17) du genre d'une goulotte à section transversale sensiblement partiellement circulaire, sont remplies d'une poudre (10ₐ) et sont fermées sur leurs sections transversales.

2. Procédé pour fabriquer un fil d'âme pour des électrodes de soudure à base de fer, de nickel, de cobalt, de cuivre et/ou d'aluminium, dans lequel un fil rempli ou fil massif (30) présentant la même composition chimique que le fil d'âme (F) ou une composition différente est enveloppé au moins une fois, de telle façon qu'au moins une bande métallique (14ₐ) est formée en une ébauche (D17) du genre d'une goulotte à section transversale sensiblement partiellement circulaire, et que dans cette ébauche est placé un fil rempli (30) ou un fil métallique, et qu'ensuite l'ébauche (D17) est fermée sur sa section transversale.

3. Procédé selon la revendication 1 ou 2, **caractérisé en ce que** les surfaces des bandes et/ou des fils formant le fil d'âme (D, F) sont soumises postérieurement à un traitement thermique ou chimique.

4. Fil d'âme pour des électrodes, qui est fabriqué selon le procédé des revendications 1 à 3, **caractérisé en ce que** le fil d'âme (D,F) comporte une âme à plusieurs enveloppes.

5. Fil d'âme pour des électrodes selon la revendication 4, **caractérisé par** un fil rempli (30) enveloppé au moins une fois pour servir d'âme.

6. Fil d'âme pour des électrodes selon la revendication 4, **caractérisé en ce que** l'âme enveloppée (10) est réalisée en une poudre.

7. Fil d'âme pour des électrodes selon la revendication 4 ou 5, **caractérisé en ce que** la gaine (12, 14) et l'enveloppe du fil rempli (30) se composent d'un alliage de fer.

8. Fil d'âme pour des électrodes selon la revendication 4 ou 5, **caractérisé en ce que** la gaine (12, 14) et l'enveloppe du fil rempli (30) se composent d'un alliage fer-chrome.

9. Fil d'âme pour des électrodes selon la revendication 4 ou 5, **caractérisé en ce que** la gaine (12, 14) se compose d'un alliage de fer et l'enveloppe du fil rempli (30) d'un alliage fer-chrome.

10. Fil d'âme pour des électrodes selon la revendication 4 ou 5, **caractérisé en ce que** la gaine (12, 14) se compose d'un alliage de fer et l'enveloppe du fil rempli (30) d'un alliage de nickel.

11. Fil d'âme pour des électrodes selon la revendication 4 ou 5, **caractérisé en ce que** la gaine (12, 14) se compose d'un alliage de fer et l'enveloppe du fil rempli (30) d'un alliage nickel-chrome.

12. Fil d'âme pour des électrodes selon la revendication 4 ou 5, **caractérisé en ce que** la gaine (12, 14) se compose d'un alliage fer-chrome et l'enveloppe du fil rempli (30) d'un alliage de nickel.

13. Fil d'âme pour des électrodes selon la revendication 4 ou 5, **caractérisé en ce que** la gaine (12, 14) et l'enveloppe du fil rempli (30) se composent d'un alliage de nickel.

14. Fil d'âme pour des électrodes selon la revendication 4 ou 5, **caractérisé en ce que** la gaine (12, 14) et l'enveloppe du fil rempli (30) se composent d'un alliage nickel-chrome.

15. Fil d'âme pour des électrodes selon la revendication 4 ou 5, **caractérisé en ce que** la gaine (12, 14) se compose d'un alliage de nickel et l'enveloppe du fil rempli (30) d'un alliage nickel-chrome.

16. Fil d'âme pour des électrodes selon la revendication 4 ou 5, **caractérisé en ce que** la gaine (12, 14) se compose d'un alliage de nickel et l'enveloppe du fil rempli (30) d'un alliage de cuivre.

17. Fil d'âme pour des électrodes selon la revendication 4 ou 5, **caractérisé en ce que** la gaine (12, 14) et l'enveloppe du fil rempli (30) se composent d'un alliage de cuivre.

18. Fil d'âme pour des électrodes selon la revendication 4 ou 5, **caractérisé en ce que** la gaine (12, 14) se composent d'un alliage de cuivre et l'enveloppe du fil rempli d'un alliage de nickel.

19. Fil d'âme pour des électrodes selon la revendication 4 ou 5, **caractérisé en ce que** la gaine (12, 14) et l'enveloppe du fil rempli (30) se compose d'un alliage de cobalt.

20. Fil d'âme pour des électrodes selon la revendication 4 ou 5, **caractérisé en ce que** la gaine (12, 14) se compose d'un alliage de cobalt et l'enveloppe du fil rempli (30) d'un alliage de nickel.

21. Fil d'âme pour des électrodes selon la revendication 4 ou 5, **caractérisé en ce que** la gaine (12, 14) se compose d'aluminium ou d'un alliage d'aluminium et l'enveloppe du fil rempli (30) d'un alliage de fer ou de nickel.

22. Fil d'âme pour des électrodes selon la revendication 4 ou 5, **caractérisé en ce que** la gaine (12, 14) se compose d'aluminium et l'enveloppe du fil rempli (30) d'un alliage d'aluminium.

23. Fil d'âme pour des électrodes selon la revendication 4, **caractérisé en ce qu'**il comporte un fil massif entouré d'au moins une enveloppe, et **en ce que** la gaine (12, 14) et le fil massif inséré se composent d'un alliage de fer.

24. Fil d'âme pour des électrodes selon la revendication 4, **caractérisé en ce qu'**il comporte un fil massif entouré d'au moins une enveloppe, et **en ce que** la gaine (12, 14) se compose d'un alliage de fer et le fil massif inséré d'un alliage de nickel.

25. Fil d'âme pour des électrodes selon la revendication 4, **caractérisé en ce qu'**il comporte un fil massif entouré d'au moins une enveloppe, et **en ce que** la gaine (12, 14) et le fil massif inséré se composent d'un alliage de nickel.

26. Fil d'âme pour des électrodes selon la revendication 4, **caractérisé en ce qu'**il comporte un fil massif entouré d'au moins une enveloppe, et **en ce que** la gaine (12, 14) se compose d'un alliage de nickel et le fil massif inséré d'un alliage de cuivre.

27. Fil d'âme pour des électrodes selon la revendication 4, **caractérisé en ce qu'**il comporte un fil massif entouré d'au moins une enveloppe, et **en ce que** la gaine (12, 14) et le fil massif inséré se composent d'un alliage de cuivre.

28. Fil d'âme pour des électrodes selon la revendication 4, **caractérisé en ce qu'**il comporte un fil massif entouré d'au moins une enveloppe, et **en ce que** la gaine (12, 14) du fil massif inséré se compose d'aluminium ou d'un alliage d'aluminium.

29. Fil d'âme pour des électrodes selon l'une des revendications 4 à 28, **caractérisé en ce que** le diamètre extérieur (d) du fil d'âme (D, F) fabriqué selon ce procédé est compris entre 1,6 et 6,0 mm.

30. Fil d'âme pour des électrodes selon l'une des revendications 4 à 28, **caractérisé en ce qu'**une bande (14ₐ) pour l'enveloppe extérieure (14) du fil d'âme (D, F) présente une épaisseur de bande (e) de 0,1 à 0,8 mm, de préférence de 0,2 à 0,5 mm.

31. Fil d'âme pour des électrodes selon les revendications 4, 5, 7 à 22, **caractérisé en ce qu'**une bande pour la fabrication du fil rempli inséré (30) présente une épaisseur de bande de 0,2 à 0,5 mm.

32. Fil d'âme pour des électrodes selon l'une des revendications 4 à 31, **caractérisé en ce que** les épaisseurs de paroi (b, e) de l'enveloppe (12, 14) sont différentes.

33. Fil d'âme pour des électrodes selon l'une des revendications 4 à 32, **caractérisé par** un rapport entre l'épaisseur de paroi (e) de l'enveloppe extérieure (14) et l'épaisseur (b) de l'enveloppe intérieure (12) compris entre 1/1 et 1/2.

34. Fil d'âme pour des électrodes selon les revendications 4, 5, 7 à 22, **caractérisé en ce que** la charge du fil rempli (30) contient des substances dures telles que des borures, des carbures, des nitrures et des siliciures.

35. Fil d'âme pour des électrodes selon les revendications 4, 5, 7 à 22, **caractérisé en ce que** la charge du fil rempli (30) contient des éléments désoxydants tels que du silicium, du manganèse ou similaire.

36. Fil d'âme pour des électrodes selon les revendications 4, 5, 7 à 22, **caractérisé en ce que** la charge du fil rempli (30) contient des stabilisateurs de l'arc tels que des oxydes, des silicates, des carbonates ou similaire.

37. Fil d'âme pour des électrodes selon l'une des revendications 4 à 36, **caractérisé en ce que** les surfaces des bandes (12ₐ, 14ₐ) et des fils pour le fil d'âme sont munis d'une surface métallique, en particulier sont cuivrés.
